# EUROPÄISCHE PATENTSCHRIFT

(11) **EP 3 436 778 B1**
(45) Veröffentlichungstag und Bekanntmachung des Hinweises auf die Patenterteilung: **19.08.2020**
(21) Anmeldenummer: 17708220.3
(22) Anmeldetag: 01.03.2017
(51) Int. Cl.: G01C 15/00, G01C 25/00

(54) **NIVELLIERVORRICHTUNG MIT EINER PENDELNDEN LICHTERZEUGUNGSEINHEIT**
LEVELLING APPARATUS HAVING AN OSCILLATING LIGHT GENERATION UNIT
DISPOSITIF DE NIVELLEMENT MUNI D'UNE UNITÉ DE PRODUCTION DE LUMIÈRE OSCILLANTE

(30) Priorität: 29.03.2016 DE 102016205089
(43) Veröffentlichungstag der Anmeldung: 06.02.2019
(73) Patentinhaber: Robert Bosch GmbH, 70442 Stuttgart (DE)
(72) Erfinder: YUEN, Eric, Hong Kong (CN); CHEUNG, Philip, Hong Kong (CN); JIANG, John, Shenzhen City Guangdong 518000 (CN)
(86) Internationale Anmeldenummer: PCT/EP2017/054715
(87) Internationale Veröffentlichungsnummer: WO 2017/167525

(56) Entgegenhaltungen:
- WO-A1-2010/136233
- US-A1- 2007 124 947

## Beschreibung

### Stand der Technik

Die vorliegende Erfindung betrifft eine Nivelliervorrichtung mit einem Gehäuse und einer im Gehäuse angeordneten Lichterzeugungseinheit, die relativ zum Gehäuse pendelnd gelagert ist und mindestens eine Lichtquelle aufweist, der zumindest eine erste Linse zur Erzeugung einer ersten Lichtebene und eine zweite Linse zur Erzeugung einer zweiten Lichtebene zugeordnet sind.

Aus dem Stand der Technik ist eine derartige Nivelliervorrichtung bekannt, die ein Gehäuse und eine im Gehäuse angeordnete Lichterzeugungseinheit aufweist. Die Lichterzeugungseinheit ist dabei relativ zum Gehäuse pendelnd gelagert und weist mindestens eine Lichtquelle auf. Der mindestens einen Lichtquelle sind dabei vorzugsweise zumindest eine erste Linse zur Erzeugung einer ersten Lichtebene und eine zweite Linse zur Erzeugung einer zweiten Lichtebene zugeordnet. Bevorzugt ist die erste Linse senkrecht zur zweiten Linse ausgerichtet, wobei beide Linsen in einem gemeinsamen Halteelement angeordnet sind. Das Halteelement weist zur Anordnung der beiden Linsen eine T-förmige Ausnehmung auf, die eine hohe Fertigungsgenauigkeit erfordert, um die beiden Linsen senkrecht zueinander auszurichten.

Weitere Nivelliervorrichtungen sowie Haltevorrichtungen sind beispielsweise aus US 2007/0124947 oder WO 2010/136233 A1 bekannt.

### Offenbarung der Erfindung

Die vorliegende Erfindung stellt eine neue Nivelliervorrichtung mit einem Gehäuse und einer im Gehäuse angeordneten Lichterzeugungseinheit bereit, die relativ zum Gehäuse pendelnd gelagert ist und mindestens eine Lichtquelle aufweist, der zumindest eine erste Linse zur Erzeugung einer ersten Lichtebene und eine zweite Linse zur Erzeugung einer zweiten Lichtebene zugeordnet sind. Eine Haltevorrichtung mit einem ersten und zweiten Halteelement zur Anordnung der ersten und zweiten Linse ist vorgesehen, wobei die erste Linse am ersten Halteelement angeordnet ist und die zweite Linse am zweiten Halteelement angeordnet ist, und wobei die Haltevorrichtung dazu ausgebildet ist, die erste und zweite Linse zumindest im Wesentlichen senkrecht zueinander auszurichten.

Die Erfindung ermöglicht somit die Bereitstellung einer Nivelliervorrichtung, bei der durch das erste und zweite Halteelement eine schnelle und einfache Ausrichtung der beiden Linsen zueinander ermöglicht werden kann. Somit können die beiden Linsen auf einfache Art und Weise exakt zueinander ausgerichtet werden, sodass Fertigungstoleranzen der Halteelemente sicher und zuverlässig ausgeglichen werden können.

Erfindungsgemäß sind das erste und zweite Halteelement zur Ausrichtung der ersten und zweiten Linse relativ zueinander verdrehbar. Somit kann eine schnelle und unkomplizierte Ausrichtung der beiden Halteelemente zueinander ermöglicht werden, wobei die beiden Linsen relativ zueinander ausgerichtet werden.

Das erste und zweite Halteelement weisen bevorzugt jeweils eine Positionieraufnahme zur zumindest abschnittsweisen Aufnahme der ersten oder zweiten Linse auf. Somit können die beiden Linsen jeweils sicher und zuverlässig am zugeordneten Halteelement angeordnet werden.

Gemäß einer Ausführungsform weisen die Positionieraufnahmen jeweils zumindest ein Positionierelement zum Positionieren der ersten oder zweiten Linse auf. Somit kann ein Halteelement bereitgestellt werden, bei dem eine genaue und exakte Anordnung der jeweiligen Linse ermöglicht werden kann.

Die Positionieraufnahme des ersten Halteelements ist vorzugsweise in einer ersten Richtung der Haltevorrichtung angeordnet und die Positionieraufnahme des zweiten Halteelements ist bevorzugt in einer zweiten Richtung der Haltevorrichtung angeordnet, wobei die erste Richtung zumindest annähernd orthogonal zur zweiten Richtung angeordnet ist. Somit kann auf einfache Art und Weise die zumindest im Wesentlichen senkrechte Anordnung der beiden Linsen zueinander ermöglicht werden.

Vorzugsweise weisen das erste und zweite Halteelement jeweils eine Aufnahme zur zumindest abschnittsweisen Aufnahme der im jeweils anderen Halteelement angeordneten ersten oder zweiten Linse auf. Somit kann eine stabile und robuste Anordnung der beiden Linsen in den Halteelementen ermöglicht werden.

Die Aufnahmen sind vorzugsweise größer als die Positionieraufnahmen und/oder die erste und/oder zweite Linse. Somit kann einfach und unkompliziert die Anordnung der beiden Linsen in den Aufnahmen der Halteelemente ermöglicht werden.

Bei zumindest einem Halteelement bilden die Positionieraufnahme und die Aufnahme bevorzugt eine zusammenhängende T-förmige Öffnung aus. Somit kann die Ausbildung einer kompakten Aufnahme ermöglicht werden, die einfach zu fertigen ist.

Gemäß einer Ausführungsform weist zumindest ein Halteelement ein Bedienelement zum Ausrichten des ersten und zweiten Halteelements relativ zueinander auf. Somit kann auf einfache Art und Weise eine Ausrichtung der Halteelemente relativ zueinander ermöglicht werden.

Vorzugsweise ist die erste Linse über eine Klebeverbindung mit dem ersten Halteelement verbunden und/oder die zweite Linse ist bevorzugt über eine Klebeverbindung mit dem zweiten Halteelement verbunden. Somit kann eine stabile und robuste Verbindung einer Linse mit dem zugeordneten Halteelement ermöglicht werden.

Das erste und zweite Halteelement weisen erfindungsgemäß jeweils einen scheibenförmigen Grundkörper auf, vorzugsweise sind sie koaxial zueinander angeordnet. Somit können Halteelemente mit einer geeigneten Form zur Ausrichtung zueinander bereitgestellt werden.

Erfindungsgemäß sind das erste und zweite Halteelement über eine Klebeverbindung miteinander verbunden, wobei zumindest ein Halteelement mindestens eine Ausnehmung zur Anordnung eines Klebemittels aufweist. Somit können die Halteelemente in ihrer ausgerichteten Position zueinander sicher fixiert werden. Bevorzugt ist die erste und/oder zweite Linse nach Art einer Zylinderlinse ausgebildet. Somit kann auf einfache Art und Weise eine geeignete Linse bereitgestellt werden.

Darüber hinaus stellt die Erfindung eine Haltevorrichtung für eine Nivelliervorrichtung bereit, die ein Gehäuse und eine im Gehäuse angeordnete Lichterzeugungseinheit aufweist, die relativ zum Gehäuse pendelnd gelagert ist und mindestens eine Lichtquelle aufweist, der zumindest eine erste Linse zur Erzeugung einer ersten Lichtebene und eine zweite Linse zur Erzeugung einer zweiten Lichtebene zugeordnet sind. Eine Haltevorrichtung mit einem ersten und zweiten Halteelement ist zur Anordnung der ersten und zweiten Linse vorgesehen, wobei die erste Linse am ersten Halteelement angeordnet ist und die zweite Linse am zweiten Halteelement angeordnet ist, und wobei die Haltevorrichtung dazu ausgebildet ist, die erste und zweite Linse zumindest im Wesentlichen senkrecht zueinander auszurichten.

Die Erfindung ermöglicht somit die Bereitstellung einer Haltevorrichtung für eine Nivelliervorrichtung, bei der durch das erste und zweite Halteelement eine schnelle und einfache Ausrichtung der beiden Linsen relativ zueinander ermöglicht werden kann. Somit können die beiden Linsen auf einfache Art und Weise exakt zueinander ausgerichtet werden, sodass Fertigungstoleranzen der Halteelemente sicher und zuverlässig ausgeglichen werden können.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht einer beispielhaften Nivelliervorrichtung mit einer Lichterzeugungseinheit,
- Fig. 2: eine perspektivische Ansicht der Lichterzeugungseinheit von Fig. 1,
- Fig. 3: eine perspektivische Ansicht einer der Lichterzeugungseinheit von Fig. 1 und Fig. 2 zugeordneten Haltevorrichtung,
- Fig. 4: eine Explosionsansicht der Haltevorrichtung von Fig. 3,
- Fig. 5: eine Vorderansicht der Haltevorrichtung von Fig. 3 und Fig. 4, und
- Fig. 6: eine Schnittansicht der Haltevorrichtung von Fig. 5 gesehen in Richtung von Pfeilen VI - VI in Fig. 5.

### Beschreibung der Ausführungsbeispiele

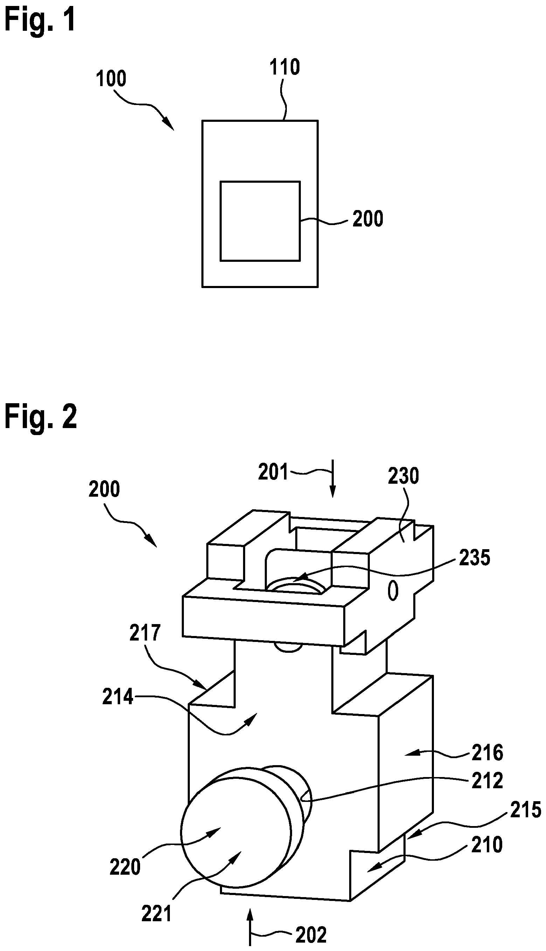

Fig. 1 zeigt eine beispielhafte Nivelliervorrichtung 100 mit einem Gehäuse 110 und einer im Gehäuse 110 angeordneten Lichterzeugungseinheit 200. Das Gehäuse 110 weist vorzugsweise Kunststoff auf und ist bevorzugt als Kunststoffspritzguss-Schalengehäuse ausgebildet. Die Lichterzeugungseinheit 200 ist dabei vorzugsweise relativ zum Gehäuse 110 pendelnd gelagert und weist bevorzugt mindestens eine Lichtquelle (220 in Fig. 2) auf. Ein von der Lichterzeugungseinheit 200 erzeugtes Nivelliersignal wird vorzugsweise durch ein in das Gehäuse 110 integriertes Fenster aus dem Gehäuse 110 abgestrahlt. Die Lichterzeugungseinheit 200 ist dabei bevorzugt netzunabhängig über einen Akku betreibbar, kann jedoch auch netzabhängig betrieben werden.

Fig. 2 zeigt die Lichterzeugungseinheit 200 von Fig. 1 mit einem ersten und zweiten Ende 201, 202. Die Lichterzeugungseinheit 200 weist vorzugsweise einen Grundkörper 210 auf, der illustrativ kreuzförmig ausgebildet ist, jedoch auch eine beliebig andere Form aufweisen kann, z.B. eine Rechteckform. Dabei weist der Grundkörper 210 vorzugsweise eine Vorderseite 214, eine Rückseite 215, sowie eine erste, illustrativ rechte Seitenfläche 216 und eine zweite, illustrativ linke Seitenfläche 217 auf. An ihrem zweiten Ende 202 weist die Lichterzeugungseinheit 200 ein Pendelelement 230 mit bevorzugt einem Kreuzgelenk 235 auf, das die Lichterzeugungseinheit 200 pendelnd im Gehäuse 110 anordnet.

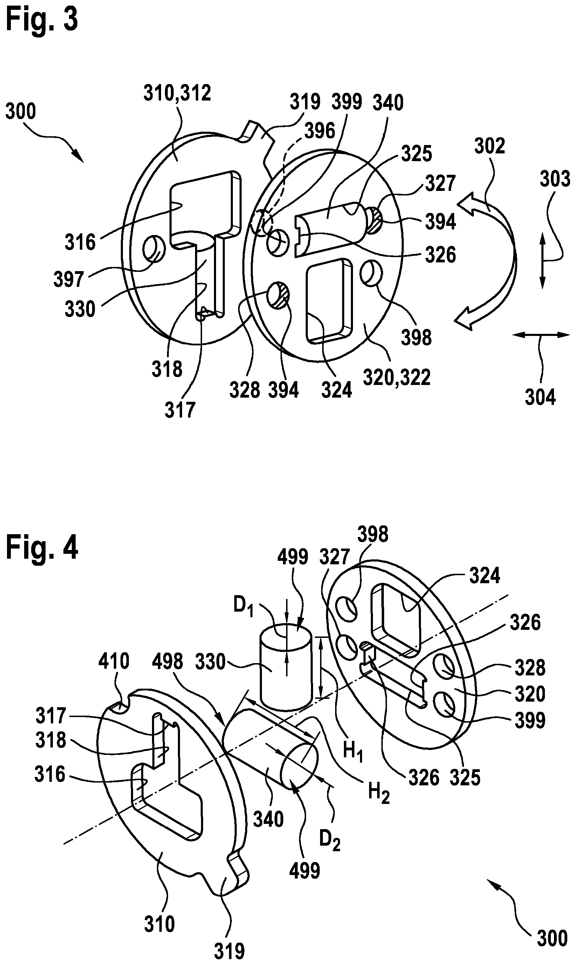

Vorzugsweise weist die Lichterzeugungseinheit 200 mindestens eine Lichtquelle 220 auf. Bevorzugt ist die Lichtquelle 220 nach Art einer Laserdiode ausgebildet und wird nachfolgend als "die Laserdiode 220" bezeichnet. Es wird darauf hingewiesen, dass die illustrative Ausgestaltung der Lichterzeugungseinheit 200 mit einer Lichtquelle 220 lediglich beispielhaften Charakter hat und nicht als Einschränkung der Erfindung zu sehen ist. So kann die Lichterzeugungseinheit 200 auch mehr als eine Lichtquelle 220 aufweisen, z.B. zwei Lichtquellen. Die Laserdiode 220 ist dabei vorzugsweise dazu ausgebildet, im Betrieb zumindest eine vertikale und/oder eine horizontale Lichtebene auszustrahlen. Hierfür ist der Laserdiode 220 bevorzugt zumindest eine erste Linse (330 in Fig. 3) zur Erzeugung einer ersten Lichtebene und eine zweite Linse (340 in Fig. 3) zur Erzeugung einer zweiten Lichtebene zugeordnet. Vorzugsweise bilden die ersten und zweiten Lichtebenen dabei das Nivelliersignal aus.

Zur Anordnung der mindestens einen Laserdiode 220 am Grundkörper 210 weist dieser illustrativ, und vorzugsweise an seiner Vorderseite 214, zumindest eine Aufnahme 212 auf. Bevorzugt ist die Aufnahme 212 abschnittsweise im Grundkörper 210 ausgebildet, könnte jedoch auch von der Vorderseite 214 zur Rückseite 215 durchgängig ausgebildet sein.

Es wird darauf hingewiesen, dass die Anordnung der Aufnahme 212 an der Vorderseite 214 lediglich beispielhaften Charakter hat und nicht als Einschränkung der Erfindung zu sehen ist. So kann die Aufnahme 214 auch an der Rückseite 215 und/oder einer Seitenfläche 216, 217 ausgebildet sein. Darüber hinaus kann auch eine Aufnahme an einer Seite z.B. Vorderseite/Rückseite bzw. Seitenfläche des Grundkörpers 210 angeordnet sein und eine zweite bzw. weitere Aufnahme kann an einer weiteren Seite, z.B. Seitenfläche bzw. Vorderseite/Rückseite angeordnet sein. Dabei ist eine Lichtaustrittsöffnung 221 der Laserdiode 220 vom Grundkörper 210 wegweisend angeordnet bzw. derart angeordnet, dass das Nivelliersignal das Gehäuse 110 vorzugsweise über ein Fenster verlässt.

Fig. 3 zeigt eine der Lichterzeugungseinheit 200 von Fig. 1 und Fig. 2 zugeordnete Haltevorrichtung 300. Diese weist vorzugsweise ein erstes und zweite Halteelement 310, 320 auf und ist zur Anordnung zumindest einer ersten und zweiten Linse 330, 340 ausgebildet. Die Halteelemente 310, 320 weisen einen scheibenförmigen Grundkörper 312, 322 auf.

Darüber hinaus sind die beiden Halteelemente 310, 320 bevorzugt koaxial zueinander angeordnet. Dabei weist zumindest ein Halteelement 310, 320, illustrativ das erste Halteelement 310, ein Bedienelement 319 zum Ausrichten des ersten und zweiten Halteelements 310, 320 relativ zueinander auf.

Die vorzugsweise zwei Linsen 330, 340 sind, wie oben beschrieben, bevorzugt der Laserdiode 220 zugeordnet und zur Erzeugung einer ersten und zweiten Lichtebene ausgebildet, die bevorzugt gemeinsam das Nivelliersignal der Nivelliervorrichtung 100 ausbilden. Vorzugsweise sind die beiden Linsen 330, 340 jeweils nach Art einer Zylinderlinse ausgebildet. Gemäß einer Ausführungsform ist die erste Linse 330 am ersten Halteelement 310 angeordnet und die zweite Linse 340 ist am zweiten Halteelement 320 angeordnet.

Vorzugsweise ist die Haltevorrichtung 300 dazu ausgebildet, die erste und zweite Linse 330, 340 jeweils zumindest im Wesentlichen senkrecht, und insbesondere bevorzugt senkrecht zueinander, auszurichten. Hierfür sind das erste und zweite Halteelement 310, 320 zur Ausrichtung der ersten und zweiten Linse 330, 340 relativ zueinander, bevorzugt in Richtung eines Pfeils 302, verdrehbar. Es wird darauf hingewiesen, dass die beiden Linsen 330, 340 auch abweichend von dem gezeigten Ausführungsbeispiel in einem beliebig anderen vorgegebenen Winkel zueinander angeordnet bzw. ausgerichtet werden können.

Gemäß einer Ausführungsform weist zumindest ein Haltelement 310, 320, bevorzugt beide Halteelemente 310, 320, jeweils eine Positionieraufnahme 318, 325 zur zumindest abschnittsweisen Aufnahme der zugeordneten Linse 330, 340 auf. Dabei ist die am ersten Halteelement 310 angeordnete Positionieraufnahme 318 zur zumindest abschnittsweisen Aufnahme der ersten Linse 330 ausgebildet und die am zweiten Halteelement 320 angeordnete Positionieraufnahme 325 ist zur zumindest abschnittsweisen Aufnahme der zweiten Linse 330 ausgebildet.

Bevorzugt weisen die Positionieraufnahmen 318, 325 jeweils zumindest ein Positionierelement 317, 326 zum Positionieren der zugeordneten Linse 330, 340 in der Positionieraufnahme 318, 325 auf. Vorzugsweise ist die Positionieraufnahme 318 des ersten Halteelements 310 in einer ersten Richtung 303 der Haltevorrichtung 300 angeordnet und die Positionieraufnahme 325 des zweiten Halteelements 320 ist in einer zweiten Richtung 304 der Haltevorrichtung 300 angeordnet. Hierbei ist die erste Richtung 303 bevorzugt zumindest annähernd orthogonal zur zweiten Richtung 304 ausgerichtet. Dadurch ist die erste Linse 330 in der ersten Richtung 303 der Haltevorrichtung 300 angeordnet und die zweite Linse 340 ist in der zweiten Richtung 304 der Haltevorrichtung 300 angeordnet. Jedoch können die beiden Richtungen 303, 304 auch in einem beliebig anderen vorgegebenen Winkel zueinander ausgerichtet sein.

Darüber hinaus weist zumindest ein Haltelement 310, 320, bevorzugt beide Haltelemente 310, 320, jeweils eine Aufnahme 316, 324 zur zumindest abschnittsweisen Aufnahme der im jeweils anderen Halteelement 320, 310 angeordneten ersten oder zweiten Linse 340, 330 auf. Dabei sind die Aufnahmen 316, 324 vorzugsweise größer als die Positionieraufnahmen 318, 325 und/oder die erste und/oder zweite Linse 330, 340. Bevorzugt sind bei zumindest einem Halteelement 310, 320, illustrativ beim ersten Halteelement 310, die Positionieraufnahme 318 und die Aufnahme 316 zusammenhängend ausgebildet, wobei eine bevorzugt T-förmige Öffnung 316 ausbildet wird. Jedoch kann die zusammenhängende Öffnung 316 auch eine beliebig andere Form aufweisen, die bevorzugt abhängig von einer Ausrichtung der beiden Aufnahmen 316, 318 zueinander ist.

Vorzugsweise sind das erste und zweite Halteelement 310, 320 über eine Klebeverbindung miteinander verbunden, wobei zumindest ein Halteelement 310, 320 mindestens eine Ausnehmung 396, 397; 327, 328, 398, 399 zur Anordnung eines Klebemittels 394 aufweist. Bevorzugt ist zumindest im Bereich der Positionieraufnahme 318, 325 und/oder der Aufnahme 316, 324 eine Ausnehmung 396, 397; 327, 328, 398, 399 zur Anordnung des Klebemittels 394 angeordnet.

Illustrativ ist in Fig. 3 rechts von der Positionieraufnahme 325 und links von der Aufnahme 324, bzw. in den Ausnehmungen 327, 328 des zweiten Halteelements 320, das Klebemittel 394 angeordnet. Jedoch kann das Klebemittel 394 auch in den Ausnehmungen 396, 397, 398, 399 angeordnet sein. Bevorzugt ist das Klebemittel 394 als hochfestes Klebemittel ausgebildet, das vorzugsweise eine niedrige Viskosität aufweist.

Fig. 4 zeigt die Haltevorrichtung 300 von Fig. 3 und verdeutlicht die beiden als Zylinderlinsen ausgebildeten Linsen 330, 340. Dabei weist die erste Zylinderlinse 330 vorzugsweise einen Durchmesser D₁ und eine Höhe H₁ auf und die zweite Zylinderlinse 340 weist bevorzugt einen Durchmesser D₂ und eine Höhe H₂ auf.

Vorzugsweise sind die beiden Zylinderlinsen 330, 340 gleich ausgebildet, können jedoch auch unterschiedliche Durchmesser D₁, D₂ und/oder Höhen H₁, H₂ aufweisen.

Des Weiteren verdeutlicht Fig. 4 das erste Halteelement 310 von Fig. 3, das gemäß einer weiteren Ausführungsform an seinem Außenumfang eine Ausnehmung 410 aufweist. Illustrativ ist die Ausnehmung 410 gegenüberliegend von dem Bedienelement 319 von Fig. 3 ausgebildet, könnte jedoch auch an jeder beliebig anderen Stelle des Außenumfangs des ersten Halteelements 310 angeordnet sein. Vorzugsweise ist die Ausnehmung 410 zum Lösen der Klebeverbindung zwischen den beiden Halteelementen 310, 320 von Fig. 3 ausgebildet, wobei bevorzugt das zweite Halteelement 320 mit einer Kraft beaufschlagt wird.

Darüber hinaus verdeutlicht Fig. 4 das Positionierelement 317 des ersten Halteelements 310 von Fig. 3 und die vorzugsweise zwei Positionierelemente 326 des zweiten Halteelements 320 von Fig. 3. Dabei sind die beiden Positionierelemente 326 einander gegenüberliegend in der Positionieraufnahme 325 angeordnet. Vorzugsweise positioniert das Positionierelement 317 die erste Zylinderlinse 330 an ihrer Oberseite 499 und die Positionierelemente 326 des zweiten Halteelements 320 positionieren die zweite Zylinderlinse 340 an ihrer Ober- und Unterseite 499, 498, bzw. in Fig. 4 illustrativ seitlich.

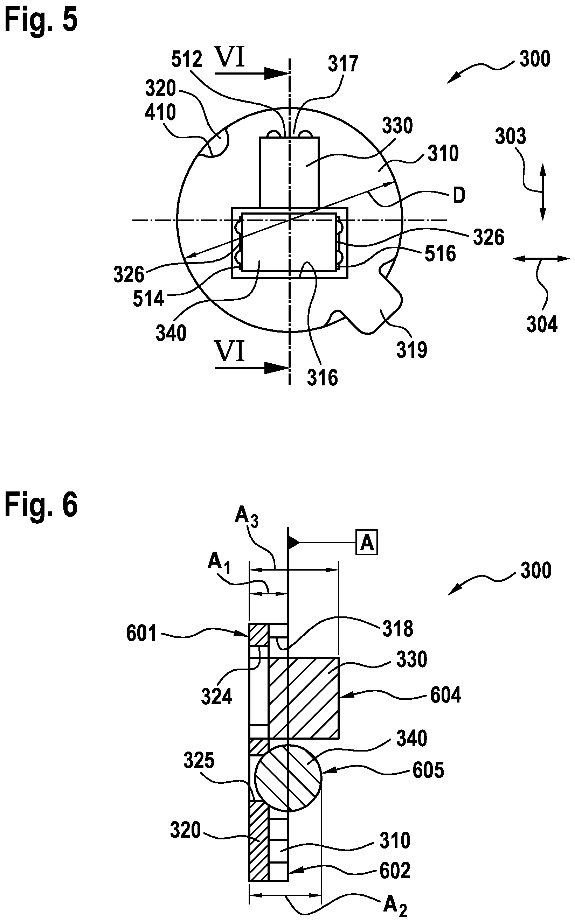

Fig. 5 zeigt die Haltevorrichtung 300 von Fig. 3 und Fig. 4 und verdeutlicht einen Durchmesser D der vorzugsweise gleich ausgebildeten, bevorzugt scheibenförmigen Halteelemente 310, 320. Vorzugsweise ist der Durchmesser D kleiner 20mm, bevorzugt 12mm mit einer Toleranz von ±0,1mm. Jedoch kann der Durchmesser D auch kleiner oder größer sein und eine beliebige Toleranz aufweisen.

Darüber hinaus ist die erste Zylinderlinse 330 bevorzugt über eine Klebeverbindung 512 mit dem ersten Halteelement 310 verbunden und/oder die zweite Zylinderlinse 340 ist über eine Klebeverbindung 514, 516 mit dem zweiten Halteelement 320 verbunden. Dabei sind die Klebeverbindungen 512, 514, 516 vorzugsweise an den Positionierelementen 317 bzw. 326 angeordnet und fixieren die Zylinderlinsen 330, 340 an den Halteelementen 310, 320. Bevorzugt weisen die Klebeverbindungen 512, 514, 516 einen Konstruktionskleber zur Ausbildung einer Klebeverbindung zwischen Metall und Glas auf, wobei der Konstruktionskleber eine vorzugsweise niedrige Viskosität und bevorzugt eine hohe Klarheit bzw. Transparenz aufweist. Der Konstruktionskleber ist vorzugsweise als UV-Industriekleber ausgebildet.

Fig. 6 zeigt die Haltevorrichtung von Fig. 3 bis Fig. 5 mit einer ersten und zweiten Seite 601, 602 und verdeutlicht die Anordnung der Zylinderlinsen 330, 340 in den Positionieraufnahmen 318, 325. Darüber hinaus ist illustrativ und vorzugsweise die zweite Seite 602 der Haltevorrichtung 300 von Fig. 3 bis Fig. 5, bzw. eine vom zweiten Halteelement 320 abgewandte Seite des ersten Halteelements 310, als Bezugsachse A der Haltevorrichtung 300 ausgebildet. Vorzugsweise weist eine der ersten Zylinderlinse 330 zugeordnete Außenseite 604 zur Bezugsachse A eine Parallelität auf, wobei sich die Außenseite 604 bevorzugt zwischen zwei Flächen, die parallel zur Bezugsachse A sind und einen Abstand von 0,02mm haben, befindet, bzw. eine Parallelität zur Bezugsachse A mit einer Toleranz von 0,02mm aufweist. Des Weiteren weist eine der zweiten Zylinderlinse 340 zugeordnete Außenseite 605 zur Bezugsachse A eine Parallelität auf, wobei sich die Außenseite 605 bevorzugt zwischen zwei Flächen, die parallel zur Bezugsachse A sind und einen Abstand von 0,03 mm haben, befindet, bzw. eine Parallelität zur Bezugsachse A mit einer Toleranz von 0,03mm aufweist.

Darüber hinaus weist die Haltevorrichtung 300 von Fig. 3 bis Fig. 5 bevorzugt einen als Dicke ausgebildeten, ersten Abstand A₁ auf, der von der ersten zur zweiten Seite 601, 602 ausgebildet ist und vorzugsweise 1,6mm ± 0,2mm beträgt. Des Weiteren weist die Haltevorrichtung 300 einen zweiten und dritten Abstand A₂, A₃ auf. Dabei ist der zweite Abstand A₂ zwischen der ersten Seite 601 und der Außenseite 604 der ersten Zylinderlinse 330 ausgebildet. Der dritte Abstand A₃ ist vorzugsweise zwischen der ersten Seite 601 und der Außenseite 605 der zweiten Zylinderlinse 340 ausgebildet und beträgt bevorzugt 3,163mm. Es wird darauf hingewiesen, dass die beschriebenen Maße und Toleranzen lediglich beispielhaften Charakter haben und nicht als Einschränkung der Erfindung zu sehen sind.

## Patentansprüche

1. Haltevorrichtung für eine Nivelliervorrichtung (100), aufweisend ein erstes und zweites Halteelement (310, 320) zur Anordnung einer ersten und zweiten Linse (330, 340), **dadurch gekennzeichnet, dass** das erste und zweite Halteelement (310, 320) jeweils einen scheibenförmigen Grundkörper (312, 322) aufweisen, wobei die erste Linse (330) am ersten Halteelement (310) angeordnet ist und die zweite Linse (340) am zweiten Halteelement (320) angeordnet ist, und wobei die Haltevorrichtung (300) dazu ausgebildet ist, die erste und zweite Linse (330, 340) zumindest im Wesentlichen senkrecht zueinander auszurichten, indem das erste Halteelemente (310) und das zweite Halteelement (320) während einer Ausrichtung der ersten und zweiten Linse (330, 340) relativ zueinander verdrehbar sind, und die Halteelemente (310, 320) in ihrer ausgerichteten Position über eine Klebeverbindung zueinander fixiert sind, wobei zumindest ein Halteelement (320) mindestens eine Ausnehmung (327, 328) zur Anordnung eines Klebemittels aufweist.

2. Haltevorrichtung nach Anspruch 1, **dadurch gekennzeichnet, dass** das erste und zweite Halteelement (310, 320) jeweils eine Positionieraufnahme (318, 325) zur zumindest abschnittsweisen Aufnahme der ersten oder zweiten Linse (330, 340) aufweisen.

3. Haltevorrichtung nach Anspruch 2, **dadurch gekennzeichnet, dass** die Positionieraufnahmen (318, 325) jeweils zumindest ein Positionierelement (317, 326) zum Positionieren der ersten oder zweiten Linse (330, 340) aufweisen.

4. Haltevorrichtung nach Anspruch 2 oder 3, **dadurch gekennzeichnet, dass** die Positionieraufnahme (318) des ersten Halteelements (310) in einer ersten Richtung (303) der Haltevorrichtung (300) angeordnet ist und die Positionieraufnahme (325) des zweiten Halteelements (320) in einer zweiten Richtung (304) der Haltevorrichtung (300) angeordnet ist, wobei die erste Richtung (303) zumindest annähernd orthogonal zur zweiten Richtung (304) ausgerichtet ist.

5. Haltevorrichtung nach einem der vorhergehenden Ansprüche, **dadurch gekennzeichnet, dass** das erste und zweite Halteelement (310, 320) jeweils eine Aufnahme (316, 324) zur zumindest abschnittsweisen Aufnahme der im jeweils anderen Halteelement (320, 310) angeordneten ersten oder zweiten Linse (340, 330) aufweisen.

6. Haltevorrichtung nach einem der Ansprüche 1 bis 5, **dadurch gekennzeichnet, dass** die Aufnahmen (316, 324) größer als die Positionieraufnahmen (318, 325) und/oder die erste und/oder zweite Linse (330, 340) sind.

7. Haltevorrichtung nach einem der Ansprüche 1 bis 6, **dadurch gekennzeichnet, dass** bei zumindest einem Halteelement (310) die Positionieraufnahme (318) und die Aufnahme (316) eine zusammenhängende T-förmige Öffnung (316) ausbilden.

8. Haltevorrichtung nach einem der vorhergehenden Ansprüche, **dadurch gekennzeichnet, dass** zumindest ein Halteelement (310, 320) ein Bedienelement (319) in Form eines den scheibenförmigen Grundkörper des Halteelements (310, 320) überragenden Vorsprungs zum Ausrichten des ersten und zweiten Halteelements (310, 320) relativ zueinander aufweist.

9. Haltevorrichtung nach einem der vorhergehenden Ansprüche, **dadurch gekennzeichnet, dass** die erste Linse (330) über eine Klebeverbindung (512) mit dem ersten Halteelement (310) verbunden ist und/oder die zweite Linse (340) über eine Klebeverbindung (514, 516) mit dem zweiten Halteelement (320) verbunden ist.

10. Haltevorrichtung nach einem der vorhergehenden Ansprüche, **dadurch gekennzeichnet, dass** das erste und zweite Halteelement (310, 320) koaxial zueinander angeordnet sind.

11. Haltevorrichtung nach einem der vorhergehenden Ansprüche, **dadurch gekennzeichnet, dass** die erste und/oder zweite Linse (330, 340) nach Art einer Zylinderlinse ausgebildet ist.

12. Nivelliervorrichtung (100) mit einem Gehäuse (110) und einer im Gehäuse (110) angeordneten Lichterzeugungseinheit (200), die relativ zum Gehäuse (110) pendelnd gelagert ist und mindestens eine Lichtquelle (220) aufweist, der zumindest eine erste Linse (330) zur Erzeugung einer ersten Lichtebene und eine zweite Linse (340) zur Erzeugung einer zweiten Lichtebene zugeordnet sind, umfassend eine Haltevorrichtung (300) nach einem der vorhergehenden Ansprüche.

## Claims

1. Holding apparatus for a levelling apparatus (100), having a first and a second holding element (310, 320) for arranging a first and second lenses (330, 340), **characterized in that** the first and second holding elements (310, 320) in each case have a disc-shaped main body (312, 322), wherein the first lens (330) is arranged on the first holding element (310) and the second lens (340) is arranged on the second holding element (320), and wherein the holding apparatus (300) is designed to orient the first and second lenses (330, 340) at least substantially perpendicularly to one another by way of the first holding element (310) and the second holding element (320) being capable of being rotated relative to one another and the holding elements (310, 320) being fixed with respect to one another in their oriented positions via an adhesive bond, wherein at least one holding element (320) has at least one recess (327, 328) for arranging an adhesive agent.

2. Holding apparatus according to Claim 1, **characterized in that** the first and second holding elements (310, 320) respectively have a positioning socket (318, 325) for the at least regional accommodation of the first or second lens (330, 340).

3. Holding apparatus according to Claim 2, **characterized in that** the positioning sockets (318, 325) respectively have at least one positioning element (317, 326) for positioning the first or second lens (330, 340).

4. Holding apparatus according to Claim 2 or 3, **characterized in that** the positioning socket (318) of the first holding element (310) is arranged in a first direction (303) of the holding apparatus (300) and the positioning socket (325) of the second holding element (320) is arranged in a second direction (304) of the holding apparatus (300), with the first direction (303) being oriented at least approximately orthogonally to the second direction (304).

5. Holding apparatus according to one of the preceding claims, **characterized in that** the first and second holding elements (310, 320) respectively have a socket (316, 324) for the at least regional accommodation of the first or second lens (340, 330) arranged in the respective other holding element (320, 310).

6. Holding apparatus according to one of Claims 1 to 5, **characterized in that** the sockets (316, 324) are larger than the positioning sockets (318, 325) and/or the first and/or second lens (330, 340).

7. Holding apparatus according to one of Claims 1 to 6, **characterized in that** in the case of at least one holding element (310), the positioning socket (318) and the socket (316) form a contiguous T-shaped opening (316).

8. Holding apparatus according to one of the preceding claims, **characterized in that** at least one holding element (310, 320) has an operating element (319) in the form of a projection, extending beyond the disc-shaped main body of the holding element (310, 320), for orienting the first and second holding elements (310, 320) relative to one another.

9. Holding apparatus according to one of the preceding claims, **characterized in that** the first lens (330) is connected to the first holding element (310) via an adhesive bond (512) and/or the second lens (340) is connected to the second holding element (320) via an adhesive bond (514, 516).

10. Holding apparatus according to one of the preceding claims, **characterized in that** the first and second holding elements (310, 320) are arranged coaxially relative to one another.

11. Holding apparatus according to one of the preceding claims, **characterized in that** the first and/or second lens (330, 340) is/are designed in the manner of a cylindrical lens.

12. Levelling apparatus (100) having a housing (110) and a light-generating unit (200) arranged in the housing (110), said light-generating unit being supported in an oscillating manner relative to the housing (110) and having at least one light-source (220) to which at least one first lens (330), for generating a first plane of light, and one second lens (340), for generating a second plane of light, are assigned, comprising a holding apparatus (300) according to one of the preceding claims.

## Revendications

1. Dispositif de retenue pour un dispositif de nivellement (100) présentant des premier et deuxième éléments de retenue (310, 320) pour disposer des première et deuxième lentilles (330, 340),
**caractérisé en ce que** les premier et deuxième éléments de retenue (310, 320) présentent respectivement un corps de base (312, 322) en forme de disque,
la première lentille (330) étant disposée sur le premier élément de retenue (310) et la deuxième lentille (340) étant disposée sur le deuxième élément de retenue (320), et le dispositif de retenue (300) étant réalisé pour aligner les première et deuxième lentilles (330, 340) de manière au moins substantiellement perpendiculaire l'une à l'autre **en ce que** le premier élément de retenue (310) et le deuxième élément de retenue (320) peuvent pivoter l'un par rapport à l'autre pendant un alignement des première et deuxième lentilles (330, 340), et les éléments de retenue (310, 320) dans leur position alignée étant fixés l'un par rapport à l'autre par un assemblage adhésif, au moins un élément de retenue (320) présentant au moins un évidement (327, 328) pour disposer un adhésif.

2. Dispositif de retenue selon la revendication 1, **caractérisé en ce que** les premier et deuxième éléments de retenue (310, 320) présentent respectivement un logement de positionnement (318, 325) pour recevoir au moins par endroits la première ou la deuxième lentille (330, 340).

3. Dispositif de retenue selon la revendication 2, **caractérisé en ce que** les logements de positionnement (318, 325) présentent respectivement au moins un élément de positionnement (317, 326) pour positionner la première ou la deuxième lentille (330, 340).

4. Dispositif de retenue selon la revendication 2 ou 3, **caractérisé en ce que** le logement de positionnement (318) du premier élément de retenue (310) est disposé dans une première direction (303) du dispositif de retenue (300), et le logement de positionnement (325) du deuxième élément de retenue (320) est disposé dans une deuxième direction (304) du dispositif de retenue (300), la première direction (303) étant alignée de manière au moins approximativement orthogonale à la deuxième direction (304).

5. Dispositif de retenue selon l'une quelconque des revendications précédentes, **caractérisé en ce que** les premier et deuxième éléments de retenue (310, 320) présentent respectivement un logement (316, 324) pour recevoir au moins par endroits la première ou la deuxième lentille (340, 330) disposée dans l'autre élément de retenue (320, 310) respectivement.

6. Dispositif de retenue selon l'une quelconque des revendications 1 à 5, **caractérisé en ce que** les logements (316, 324) sont plus grands que les logements de positionnement (318, 325) et/ou que la première et/ou la deuxième lentille (330, 340).

7. Dispositif de retenue selon l'une quelconque des revendications 1 à 6, **caractérisé en ce que** sur au moins un élément de retenue (310), le logement de positionnement (318) et le logement (316) réalisent une ouverture en forme de T (316) cohérente.

8. Dispositif de retenue selon l'une quelconque des revendications précédentes, **caractérisé en ce qu'**au moins un élément de retenue (310, 320) présente un élément de commande (319) sous la forme d'une saillie dépassant du corps de base en forme de disque de l'élément de retenue (310, 320) pour aligner les premier et deuxième éléments de retenue (310, 320) l'un par rapport à l'autre.

9. Dispositif de retenue selon l'une quelconque des revendications précédentes, **caractérisé en ce que** la première lentille (330) est reliée au premier élément de retenue (310) par un assemblage adhésif (512), et/ou la deuxième lentille (340) est reliée au deuxième élément de retenue (320) par un assemblage adhésif (514, 516).

10. Dispositif de retenue selon l'une quelconque des revendications précédentes, **caractérisé en ce que** les premier et deuxième éléments de retenue (310, 320) sont disposés coaxialement l'un par rapport à l'autre.

11. Dispositif de retenue selon l'une quelconque des revendications précédentes, **caractérisé en ce que** la première et/ou la deuxième lentille (330, 340) sont réalisées à la manière d'une lentille cylindrique.

12. Dispositif de nivellement (100) comprenant un boîtier (110) et une unité de production de lumière (200) disposée dans le boîtier (110), qui est montée oscillante par rapport au boîtier (110) et présente au moins une source de lumière (220) à laquelle est associée au moins une première lentille (330) pour produire un premier niveau de lumière et une deuxième lentille (340) pour générer un deuxième niveau de lumière, comprenant un dispositif de retenue (300) selon l'une quelconque des revendications précédentes.
